# EUROPEAN PATENT APPLICATION

(11) **EP 1 061 462 A1**
(43) Date of publication of application: **20.12.2000**
(21) Application number: 99306868.3
(22) Date of filing: 27.08.1999
(51) Int. Cl.: G06F 17/30

(54) **Storing and retrieving name card information**

(30) Priority: 18.06.1999 US 335585
(71) Applicant: Academia Sinica, Nan-Kang, Taipei (TW)
(72) Inventor: YANG, Change-Cheng, Taipei (TW); CHEN, Kuei-Hsien, Taipei City (TW)
(74) Representative: Beresford, Keith Denis Lewis

(57) **Abstract**

A database of name card information is generated by registering an applicant for a name card, receiving card information from the applicant, assigning the card information a card identifier, and assigning the card information a password. The card information includes a classification that defines a level of access to the card information. The card information is stored in the database in association with the card identifier, the classification, and the password.

## Description

### Background of the Invention

The present invention relates to generating a database of name card information and to retrieving information from that database.

A name card, such as a business card, contains information about its owner. For example, it may contain the owner's name, address, and telephone number. One problem with such cards is that they become obsolete if any of the information on them changes. Heretofore, new name cards had to be printed and distributed manually each time their information changed. This can be a daunting task, especially if a large number of cards are involved.

### Summary of the Invention

The present invention takes advantage of new technologies like the World Wide Web ("Web") to facilitate distribution of name cards. In particular, a database of name card information is maintained at a Web site. For each name card in the database, the card information includes text/images to be printed on the name card, a card identifier, a classification, and a password.

The card identifier is a unique number that enables the owner and others to locate the card information in the database. The classification defines a level of access to the card information. For example, the card may be classified as "public," in which case anyone with access to the Web site may have access to the card information. Alternatively, the classification may be "private", in which case only the owner or selected individuals may have access to the card information. The password is a character string assigned to the name card, which allows the owner to update and delete the card information.

To retrieve card information, a user accesses the Web site (or telephone system) and enters a request for a name card. This request typically includes a card identifier and/or other information that may be on the name card, such as a name, address, or telephone number. Code at the Web site searches through the database for card information that includes the information entered by the user. Once this information is located, it is retrieved and output to the user. Alternatively, the information can be used to generate and send a message to the owner of the name card.

Among other advantages, the invention eliminates the need to distribute name cards manually each time the owner's information changes. Another benefit is that a person with an outdated name card can easily obtain an up-to-date name card without having to contact the owner. This is particularly advantageous in a business context, where movement between jobs often makes it difficult to keep track of colleagues. The invention also facilitates communication with a name card owner.

According to one aspect of the invention, a database of name card information is generated by registering an applicant for a name card, receiving card information from the applicant which includes a classification that defines a level of access to the card information, assigning the card information a card identifier (e.g., selected by the user), and assigning the card information a password. The card information is stored in the database in association with the card identifier and the password.

Other aspects of the invention may include one or more of the following features/functions:

A request is received to update the card information. The request includes a password and a card identifier. The card information is then located in the database using the received card identifier. The password in the request is verified against the password assigned to the card information, and the card information is updated by substituting new card information for corresponding card information in the database.

The database stores card information for plural name cards. A request for a name card is received, which includes a card identifier. Card information is located in the database using the received card identifier. It is determined whether to output the located card information based on a classification of the located card information.

The database stores card information for plural name cards. A request for a name card is received, which includes card information. The database is searched for card information that corresponds to the card information in the request. Card information that is located by the searching is retrieved from the database. The retrieved card information is then output.

The request for a name card includes a classification, and the database is searched for card information that has the classification included in the request. The card information is output from the database over a network to a computer system, or over telephone lines to a telephone. The computer system prints the card information and/or presents a display of the card information which includes a hyperlink corresponding to at least one item of the card information.

The card information includes one or more of the following: a family name of the applicant, a first name of the applicant, a business and/or home address of the applicant, a company/organization name of the applicant, a title of the applicant, a logo, a business and/or home telephone number of the applicant, a facsimile number (or beeper number, pager number, cellular telephone number) of the applicant, an electronic mail address of the applicant, the card identifier, the classification of the card information, and a language of a name card.

Card template information is displayed. An input is received from the applicant selecting card template information and containing a card identifier. Card information that corresponds to the card identifier-is retrieved from the database. A name card is then generated based on the selected card template information and the card information.

The card information is received from the applicant over a network. The classification is "private" or "public". A request is received to delete the card information. The request includes the card identifier and the password. It is determined if the password is valid, and the card information associated with the card identifier is deleted from the database if the password is valid.

According to another aspect, the invention features a name card management system that includes first and second devices. The first device stores a Web browser. The second device maintains a Web site that is accessible via the Web browser and stores a database that includes card information for plural name cards. The second device also includes a memory which stores code to access the database via the Web site, code to register an applicant for a name card at the first device via the Web site, code to receive card information from the applicant via the Web site, code to assign the card information a password and a card identifier, code to store the card information in the database in association with the card identifier and the password, code to update the card information in the database via the Web site, code to search the database for the card information using the card identifier and/or the password, code to retrieve the card information from the database located by the searching code; and code to output the card information retrieved by the retrieving code.

In another aspect, the invention features a computer program stored on a computer-readable medium to send a message based on information selected from a database. Code in the computer program receives a card identifier and information identifying a selected communication medium. It then searches the database for card information corresponding to the card identifier and the selected communication medium. A message is sent, via the selected communication medium, using the card information.

Other features and advantages of the invention will become apparent from the following description, including the claims and the drawings.

### Brief Description of the Drawings

Fig. 1 shows a network which includes a name card information database.

Fig. 2 shows a process for generating name card information for the database.

Fig. 3 shows a process for updating the name card information in the database.

Fig. 4 shows a process for deleting the name card information from the database.

Fig. 5 shows a process for searching the database.

Fig. 6 shows a process for sending a message using name card information in the database.

Fig. 7 shows a name card.

Fig. 8 shows a name card record in the database.

Fig. 9 shows a Web page for inputting name card information.

Fig. 10 shows a Web page for displaying a name card.

### Description of the Preferred Embodiments

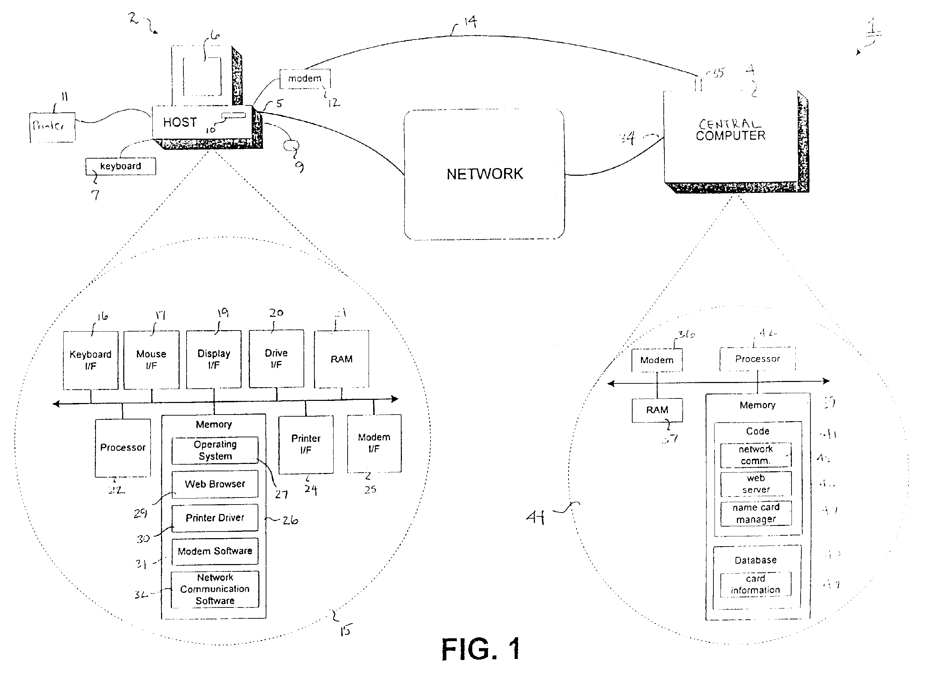

Fig. 1 shows a network 1, on which an embodiment of the invention is implemented. Network 1 may be any kind of network, such as the Internet or a local area network. Included on network 1 are host 2 and central computer 4.

Host 2 is a personal computer ("PC") or similar device that is capable of communicating over network 1. Included in host 2 are the following: network connection 5 for interfacing to network 1, display screen 6 for displaying information to a user, keyboard 7 for inputting text and commands, mouse 9 for positioning a cursor on display screen 6 and inputting user commands, and drive 10 for accessing data stored on a computer-readable storage medium such as a computer diskette, a CD-ROM, or a DVD. Printer 11 is connected to host 2 for printing text and images output from host 2, and modem 12 is connected to host 2 for communicating over telephone lines 14.

View 15 shows the architecture of host 2. Included in host 2 are keyboard interface 16, mouse interface 17, display interface 19, drive interface 20, RAM 21, processor 22, printer interface 24, modem interface 25, and memory 26. Memory 26 stores an operating system 27, such as Microsoft® Windows98®; a Web browser 29, such as Netscape® Navigator®, for accessing Web sites; a printer driver 30 for controlling printer 11; software 31 for communicating with modem 12; and network communication software 32. Network communication software 32 includes code for a TCP/IP ("Transmission Control Protocol/Internet Protocol") protocol stack used in communicating over network 1.

Central computer 4 may be a PC, a mainframe computer, or any other device that is capable of communicating with host 2 over network 1. Computer 4 includes a network interface 34 for exchanging network communications and a telephone line interface 35 for exchanging telephone line communications.

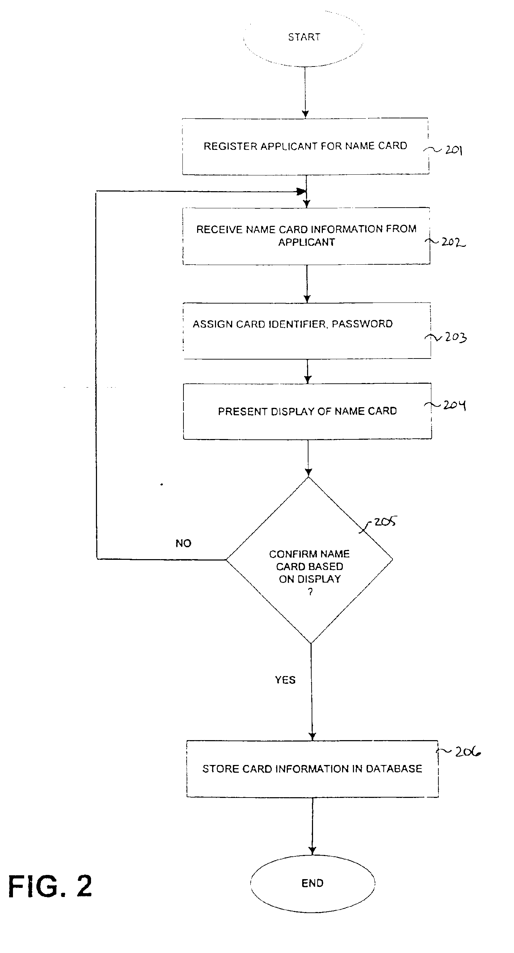

Computer 4 also includes an internal modem 36, RAM 37, memory 39 which stores database 40 and code 41, and processor 42 for executing code 41 out of RAM 37 (see view 44). Included in code 41 is network communication software 45 (same as above); Web server 46 for maintaining a Web site at computer 4 and for outputting Web pages over network 1; and name card manager 47 for executing the processes of Figs. 2 to 6 to generate, update, search through, retrieve, and delete information from database 40, and to send messages using that information.

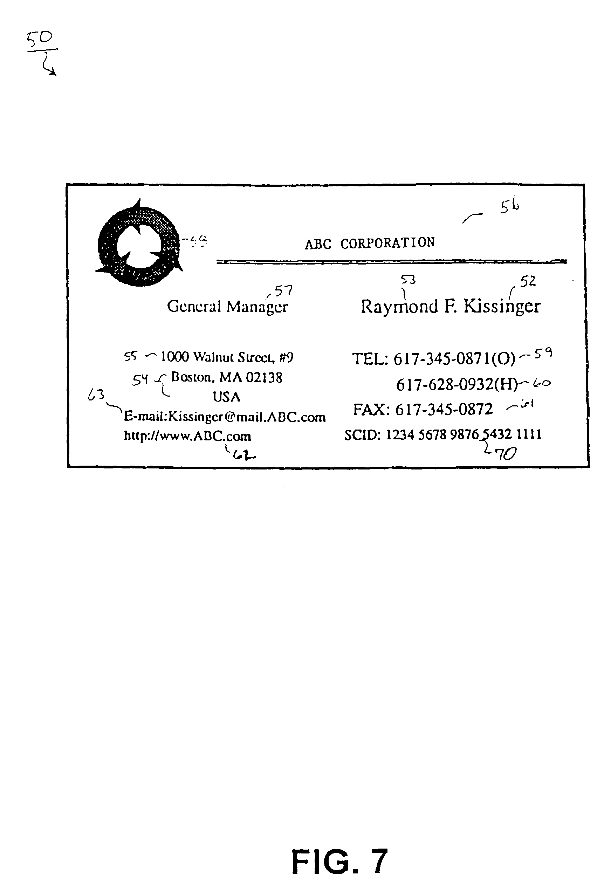

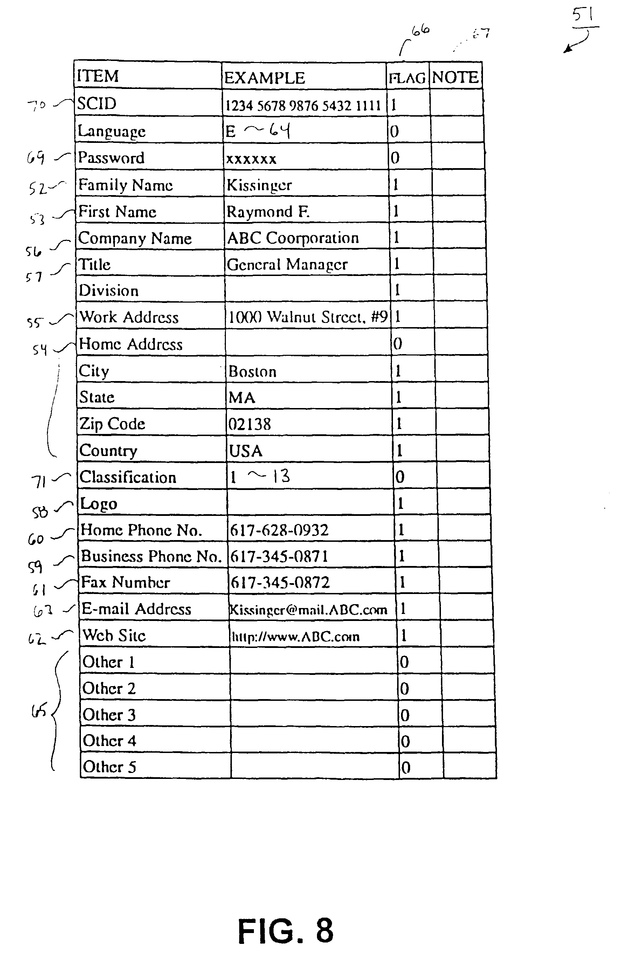

Database 40 stores name card information 49, such as text and images to be printed on "sustainable" name cards. Fig. 7 shows an example of a name card 50 and Fig. 8 shows a name card record 51 (in database 40) which includes information for that name card. Referring to both figures, record 51 includes a family name (surname) of the name card's owner 52, his first name 53, home address 54, business address 55, company/ organization name 56, title 57 (at the company), company logo 58, business telephone number 59, home telephone number 60, facsimile number 61, company Web site URL 62 ("uniform resource locator"), electronic mail address 63, a language of the resulting name card such as English, French, Mandarin Chinese, or Japanese (card 50 is in English {"E" 64}), and "other" rows 65 for other information.

Flag column 66 determines whether information is to be printed out on a name card. A "1" indicates that the information is to be printed. A "0" indicates that the information is not to be printed. These values may be changed as described below. Notes column 67 may be used to provide information pertaining to each entry in 51.

Also included in record 51 are a password 69, a sustainable card identifier ("SCID") 70, and a classification 71. Card identifier 70 is a unique character sequence, for example a number, that identifies the card information in record 51. Card identifier 70 is available to the public via computer 4's Web site and is printed out on the name card.

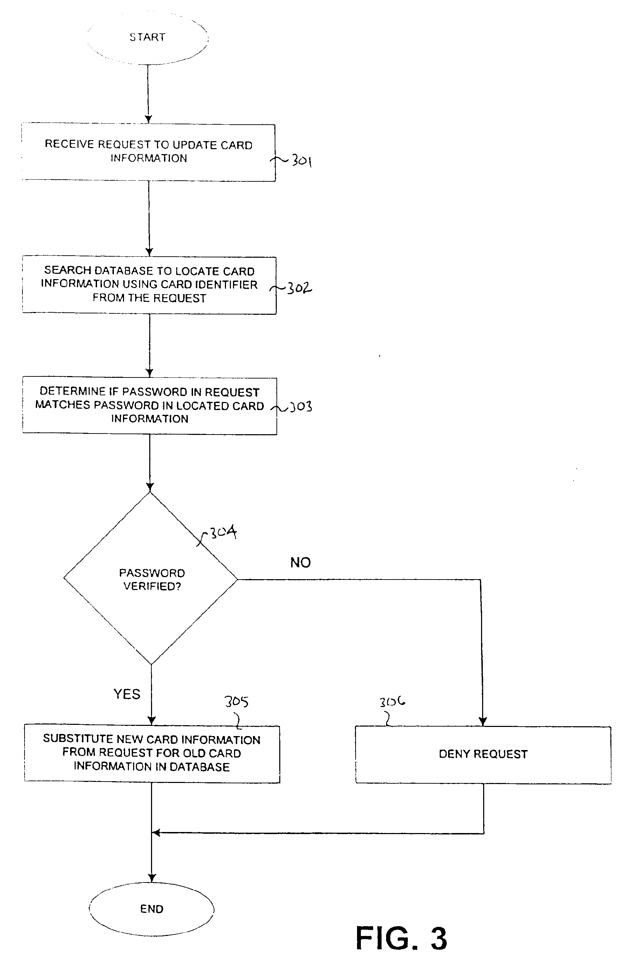

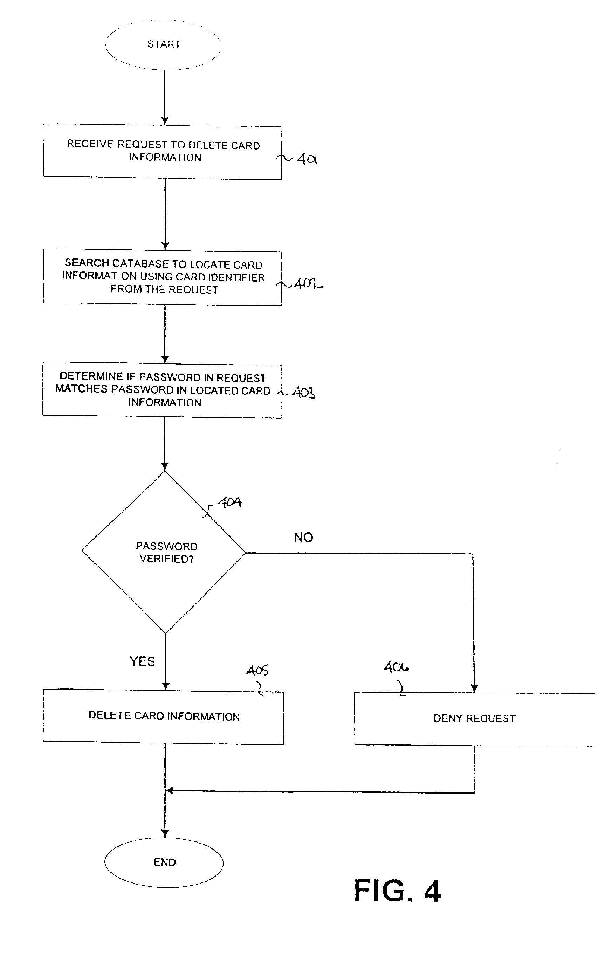

Password 69 is also a character string that is unique to record 51; however, password 69 is generally not available to the public. Rather, it is maintained in secrecy by the name card's owner and is used to change or delete record 51 (see Figs. 3 and 4).

Classification 71 indicates the level of access to the name card associated with record 51. For example, name cards may be "private", in which case only the owner (or at least someone with access to the password) may have access, or "public", in which case anyone with the card identifier may have access. Additional classification levels may also be provided. Numbers 13 in record 51 correspond to the various classification levels.

### Generating a Database of Card Information

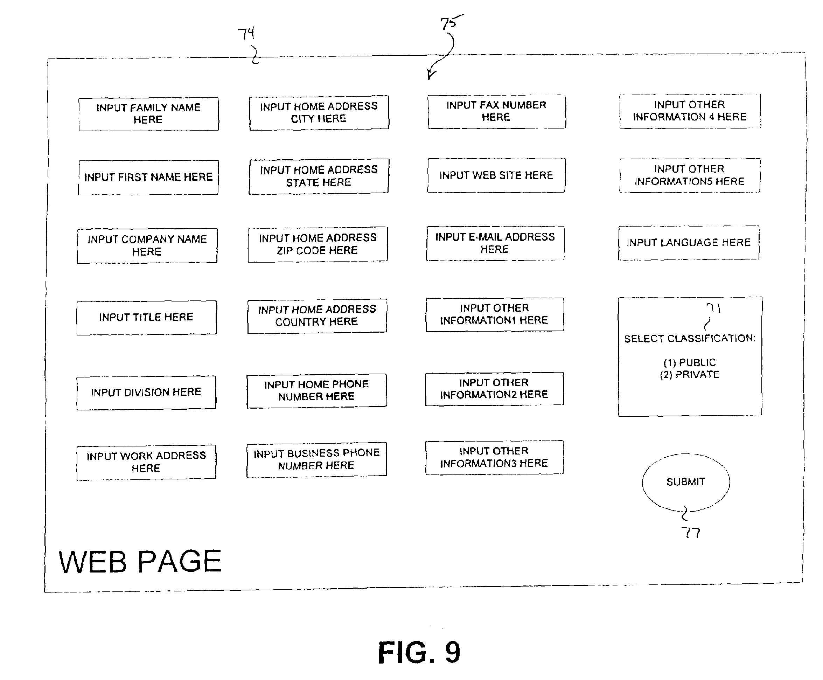

Fig. 2 shows a process for generating database 40. To begin, name card manager 47 (hereafter "manager 47") registers (201) an applicant for a name card from host 2. This may be done by providing a Web page to host 2. An example of such a Web page is shown in Fig. 9. Web page 74 is a form with fields 75 to enter name card information and to select a classification 71. Clicking-on SUBMIT button 77 causes selected information to be transmitted to computer 4's Web site.

At the Web site, manager 47 receives the information in (202). Manager 47 assigns (203) a unique card identifier and password to the name card information and organizes the information, card identifier, and password into a record such as that shown in Fig. 8. In the record, fields of page 74 that were left blank are assigned "0"; others "1".

The applicant is also given the opportunity to select the layout of the card. For example, the applicant may select from various card templates (not shown) on Web page 74. Alternatively, the applicant may be prompted to select a layout after manager 47 constructs the record. If no layout is selected, a default layout will be provided. In any event, whichever layout is used is stored in association with record 51 in database 40.

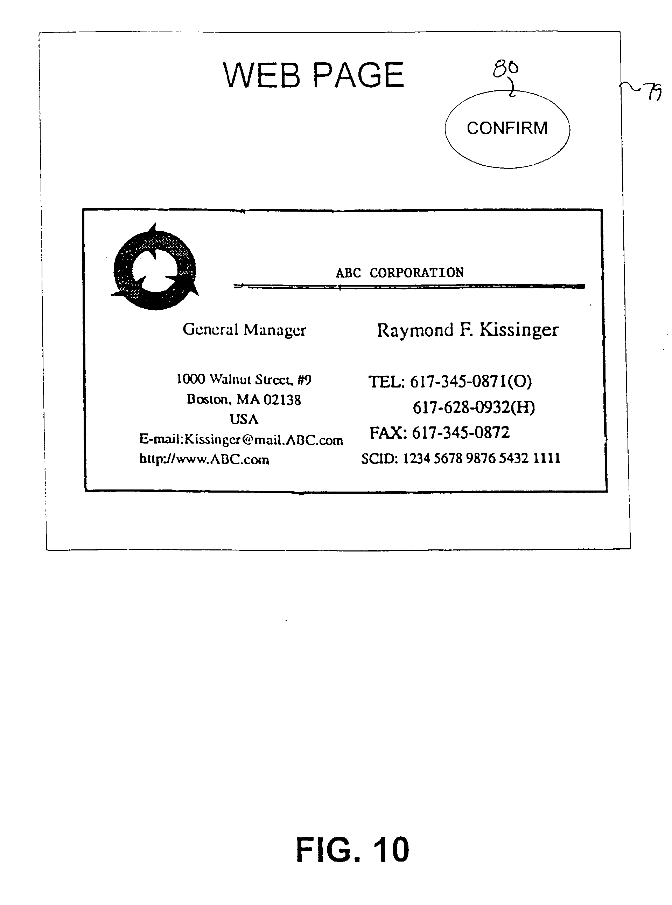

Next, manager 47 outputs a Web page 79 (Fig. 10) to host 2. Web page 79 presents (204) a display of name card 50 as it will look when it is printed. The displayed name card may include hyperlinks for appropriate card information, such as a Web site and electronic mail address. If, after viewing the displayed card, the applicant determines (205) that it is acceptable, the applicant may hit a CONFIRM button 80, in which case a confirmation message is sent to manager 47. Manager 47 then stores (206) the record in database 40. If the card is not acceptable to the applicant, manager 47 repeats (201) to (205).

### Updating the Card Information in the Database

Subsequently, the applicant may wish to update his name card. This process is shown in Fig. 3. To begin, the applicant retrieves Web page 74 (Fig. 9), enters the necessary information, including the identifier and the password of the card to be updated, and clicks on SUBMIT button 77. Since the record exists, the information entered into Web page 74 constitutes a request to update the record.

Manager 47 receives (301) this request and searches (302) database 40 to locate the record based on the input card identifier. Once the record has been located, manager 47 retrieves the password therefrom and determines (303) if the retrieved password matches the input password.

If the password is verified in (304), manager 47 substitutes (305) the new card information from the request for corresponding card information in the database. A confirmation process similar to that of Fig. 2 may then be executed. If the password has not been verified in (304), manager 47 denies (306) the request to update the record. Herein, denial may mean may simply ignoring the request or sending a message to the applicant indicating a denial.

### Deleting Card Information from the Database

The applicant may also wish to delete an existing record. This process is shown in Fig. 4. To begin, in (401) manager 47 receives a request to delete a record. This request will include both a card identifier to identify the record to be deleted and a password to confirm that the requestor has the authority to delete the record. The request may be issued via a DELETE RECORD button (not shown) on Web page 74 or by any other means.

Once manager 47 has received the request, it searches (402) database 40 to locate card information (a record) that includes the card identifier in the request. Manager 47 retrieves the password from the located record and determines (403) if the retrieved password matches the input password. If so (404), manager 47 deletes (405) the record. If not (404), manager 47 denies (406) the request.

### Retrieving Card Information from the Database

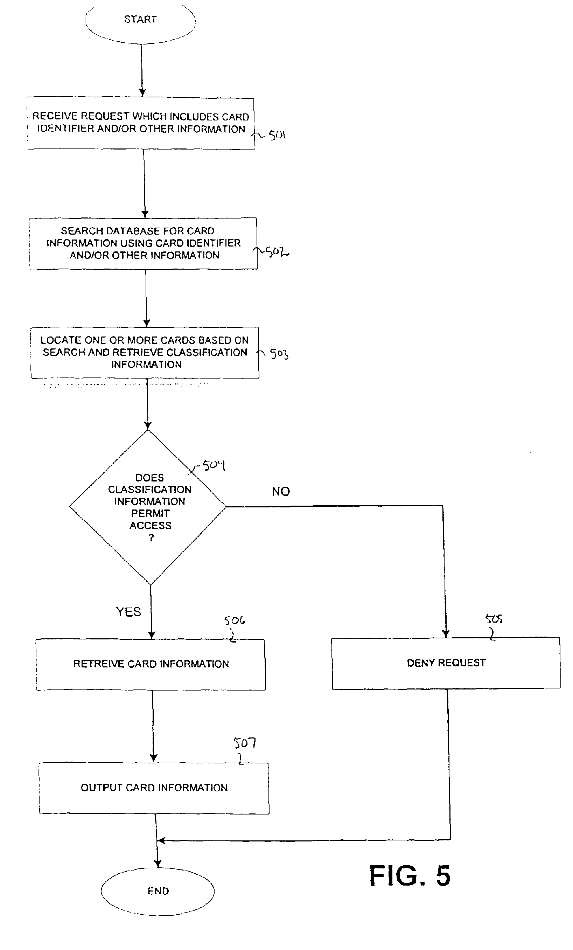

Figs. 2 to 4 describe a name card owner/applicant accessing a name card in database 40. Others, however, may also access name cards in database 40. In Fig. 5, manager 47 receives 501 a request for a name card. The request can be entered from Web page 74 (Fig. 9) or by other means. It may include a card identifier and/or other card information, such as a name, address or classification.

In response to the request, manager 47 searches (502) through database 40 using the card information in the request. Specifically, manager 47 searches through the fields of records stored in database 40 for information that matches the information in the request. Searching for information such as classification will cause records for all cards that include that information to be retrieved.

Once manager 47 locates (503) the matching record or records, it retrieves the classification information therefrom in order to determine whether the requestor has access to the name card(s) represented by those records. If the requestor does not have access (504) (for example, if the classification indicates "private" and a password is not provided in the request), the request is denied (505). If the requestor does have access (504) (for example, the classification indicates "public"), manager 47 retrieves (506) the card information from record 51 and the layout (template) information associated therewith.

Manager 47 then outputs (507) the card information. For example, a Web page (see Fig 10) may be constructed, which presents a display of the card, and sent to host 2. From there, the card may be printed on printer 11.

### Sending a Message Using Card Information

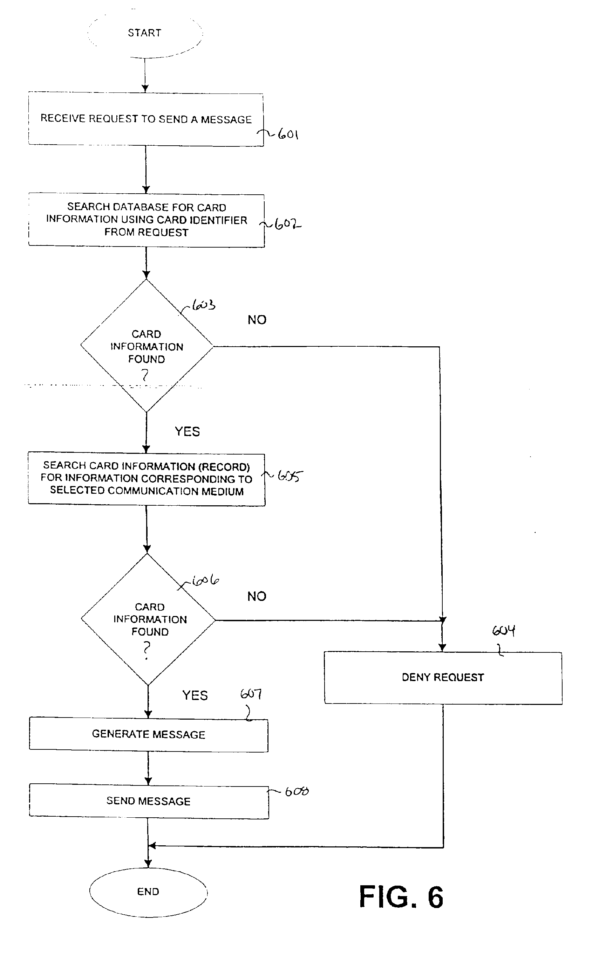

Manager 47 may also send a message using card information retrieved from database 40. Fig. 6 shows a process for doing this. To begin, manager 47 receives (601) a request to send a message. The request may be input via a Web page (not shown), and includes a card identifier and a medium of communication to/over which the message is to be sent. Examples of communication media include a telephone, a facsimile machine, a beeper, a cellular telephone, electronic mail, and a pager.

In (602), manager 47 searches database 40 for card information corresponding to the card identifier in the request. The searching here is performed in the same manner as described above. If no corresponding record is found 603, the request is denied in (604). If a corresponding record is found (603), manager 47 searches (605) the record for card information that corresponds to the selected communication medium. For example, if the selected communication medium is electronic mail, manager 47 searches the card information for an electronic mail address. Similarly, if the selected communication medium is a telephone, manager 47 searches the record for a telephone number.

If information corresponding to the selected communication medium is found in the record (606), an appropriate message is generated in (607) (otherwise the request is denied (604)). For example, an electronic mail may be generated which provides the electronic mail address of the requestor. Similarly, a voice message may be generated which provides the telephone number of the requestor. The content of the message may be specified in the request.

Manager 47 then sends (608) the message. The medium over which the message is sent (for example, network 1 or telephone lines 14) depends upon the communication media indicated the request. For example, if a facsimile machine or a beeper is indicated in the request, manager 47 sends the message over telephone lines 14. Alternatively, if electronic mail is indicated in the request, manager 47 sends the request over network 1.

### Database Management by Telephone

As an alternative to the network-based embodiment described above, the processes of Figs 2 to 6 may be implemented using a telephone as the input/output medium. For example, a touchtone telephone may be used to access computer 4 via telephone lines 14. Instead of the computer prompts described above, manager 47 will generate speech prompts instructing the user to select/input the required information. In this case, instead of displaying the name card as in Web page 79, for example, manager 47 will simply recite its contents to the user over the telephone. Otherwise, the functionality of the system is essentially the same as described above.

The invention is not limited to the specific hardware and software configurations set forth above, or to the communications media specified. For example, the host 2 and computer 4 could exchange information via wireless media. Likewise, the invention is not limited to managing the specific information set forth above, and could even be used outside the context of name cards to manage other types of related information.

Other embodiments of the invention are within the scope of the claims. For example, in the above description, passwords and card identifiers are assigned by a name card manager. In other embodiments, applicants or users can choose the card identifier, preferably one easily remembered.

The present invention has been described with respect to particular illustrative embodiments. It is to be understood that the invention is not limited to the above-described embodiments and modifications thereto, and that various changes and/or modifications are within the scope of the appended claims.

## Claims

1. A method of generating a database of name card information, comprising:
registering an applicant for a name card;
receiving card information from the applicant, the card information including a classification that defines a level of access to the card information;
assigning the card information a password;
assigning the card information a card identifier; and
storing the card information in the database in association with the card identifier and the password.

2. A method according to claim 1, further comprising:
receiving a request, which includes a password and a card identifier, to update the card information;
locating the card information in the database using the received card identifier;
verifying the password in the request against the password assigned to the card information; and
updating the card information.

3. A method according to claim 2, wherein:
the request includes new card information; and
the updating comprises substituting the new card information for corresponding card information in the database.

4. A method according to claim 1, wherein the database stores card information for plural name cards; and
the method further comprises:
receiving a request for a name card, the request including a card identifier;
locating card information in the database using the received card identifier; and
determining whether to output the located card information based on a classification of the located card information.

5. A method according to claim 1, wherein the database stores card information for plural name cards; and
the method further comprises:
receiving a request for a name card, the request including card information;
searching the database for card information that corresponds to the card information in the request;
retrieving card information from the database that is located by the searching; and
outputting the retrieved card information.

6. A method according to claim 5, wherein the request includes a classification; and
wherein the searching is performed for card information that has the classification included in the request.

7. A method according to claim 1, further comprising outputting the card information from the database, over a network, to a computer system.

8. A method according to claim 7, wherein the computer system presents a display of the card information, the display including a hyperlink corresponding to at least one item of the card information.

9. A method according to claim 7, wherein the computer system prints the card information.

10. A method according to claim 1, wherein the card information comprises one or more of the following: a family name of the applicant, a first name of the applicant, a home address of the applicant, a business address of the applicant, a company/organization name of the applicant, a title of the applicant, a logo, a business telephone number of the applicant, a home telephone number of the applicant, a facsimile number of the applicant, an electronic mail address of the applicant, and a language of a name card produced from the card information.

11. A method according to claim 1, further comprising:
displaying card template information;
receiving an input from the applicant selecting card template information and containing a card identifier;
retrieving card information from the database that corresponds to the card identifier; and
generating a name card based on the selected card template information and the card information.

12. A method according to claim 1, wherein the card information is received from the applicant over a network.

13. A method according to claim 1, wherein the classification is "private" or "public".

14. A method according to claim 1, further comprising:
receiving a request to delete the card information, the request including the card identifier and the password;
determining if the password is valid; and
deleting, from the database, the card information associated with the card identifier if the password is valid.

15. An apparatus which generates a database of name card information, comprising:
a memory for storing computer code; and
a processor for executing the computer code (i) to register an applicant for a name card, (ii) to receive card information from the applicant, the card information including a classification that defines a level of access to the card information, (iii) to assign the card information a password, (iv) to assign the card information a card identifier, and (v) to store the card information in the database in association with the card identifier and the password.

16. An apparatus according to claim 15, wherein the processor is adapted to execute code (vi) to receive a request, which includes a password and a card identifier, to update the card information, (vii) to locate the card information in the database using the received card identifier, (viii) to verify the password in the request against the password assigned to the card information, and (ix) to update the card information.

17. An apparatus according to claim 16, wherein the request includes new card information and the processor is adapted to update the card information by substituting the new card information for corresponding card information in the database.

18. An apparatus according to claim 15, wherein the database is adapted to store card information for plural name cards; and
the processor is adapted to execute code (vi) to receive a request for a name card, the request including a card identifier, (vii) to locate card information in the database using the received card identifier, and (viii) to determine whether to output the located card information based on a classification of the located card information.

19. An apparatus according to claim 15, wherein the database is adapted to store card information for plural name cards; and
the processor is adapted to execute code (vi) to receive a request for a name card, the request including card information, (vii) to search the database for card information that corresponds to the card information in the request, (viii) to retrieve the card information found by the searching, and (ix) to output the retrieved card information.

20. An apparatus according to claim 19, wherein the request includes a classification; and
wherein the processor is adapted to search through only card information that has the classification included in the request.

21. An apparatus according to claim 15, wherein:
the apparatus further comprises a network interface for exchanging communications with a network; and
the processor is adapted to execute code (vi) to output the card information from the database, over the network, to a computer system.

22. An apparatus according to claim 15, wherein:
the apparatus further comprises a telephone interface for exchanging data over telephone lines; and
the processor is adapted to execute code (vi) to output the card information from the database, over a telephone line, to a receiver.

23. An apparatus according to claim 15, wherein the card information comprises one or more of the following: a family name of the applicant, a first name of the applicant, a home address of the applicant, a business address of the applicant, a company/organization name of the applicant, a title of the applicant, a logo, a business telephone number of the applicant, a home telephone number of the applicant, a facsimile number of the applicant, an electronic mail address of the applicant, and a language of a name card to be produced from the card information.

24. Processor implementatable instructions stored on a computer readable medium for generating a database of name card information, comprising:
code to register an applicant for a name card;
code to receive card information from the applicant, the card information including a classification that defines a level of access to the card information;
code to assign the card information a password;
code to assign the card information a card identifier; and
code to store the card information in the database in association with the card identifier and the password.

25. Instructions according to claim 24,
further comprising:
code to receive a request, which includes a password and a card identifier, to update the card information;
code to locate the card information in the database using the received card identifier;
code to verify the password in the request against the password assigned to the card information; and
code to update the card information.

26. Instructions according to claim 25,
wherein:
the request includes new card information; and
the updating code substitutes the new card information for corresponding card information in the database.

27. Instructions according to claim 24, wherein the database is adapted to store card information for plural name cards;
and
the instructions further comprise:
code to receive a request for a name card, the request including a card identifier;
code to locate a card information in the database using the received card identifier; and
code to determine whether to output the located card information based on a classification of the located card information.

28. Instructions according to claim 24,
wherein the database stores card information for plural name cards; and
the instructions further comprise:
code to receive a request for a name card, the request including card information;
code to search the database for card information that includes the card information in the request;
code to retrieve the card information found by the searching; and
code to output the retrieved card information.

29. Instructions according to claim 28,
wherein the request includes a classification; and
wherein the searching code searches only through card information that has the classification included in the request.

30. Instructions according to claim 24,
further comprising code to output the card information from the database, over a network, to a computer system.

31. Instructions according to claim 24,
wherein the card information comprises one or more of the following: a family name of the applicant, a first name of the applicant, a home address of the applicant, a business address of the applicant, a company/organization name of the applicant, a title of the applicant, a logo, a business telephone number of the applicant, a home telephone number of the applicant, a facsimile number of the applicant, an electronic mail address of the applicant, and a language of a name card to be produced from the card information.

32. A name card management system, comprising:
a first device for storing a Web browser; and
a second device for maintaining a Web site that is accessible via the Web browser, and which is adapted to store a database that includes card information for plural name cards;
the second device comprising a memory adapted to store:
code to access the database via the Web site;
code to register an applicant for a name card at the first device via the Web site;
code to receive card information from the applicant via the Web site;
code to assign the card information a card identifier and a password;
code to store the card information in the database in association with the card identifier and the password;
code to update the card information in the database via the Web site;
code to search the database for the card information using the card identifier and/or the password;
code to retrieve the card information from the database located by the searching code; and
code to output the card information retrieved by the retrieving code.

33. Processor-implementable instructions stored on a computer-readable medium for sending a message based on information selected from a database, comprising:
code to receive a card identifier and information identifying a selected communication medium;
code to search the database for card information corresponding to the card identifier and the selected communication medium; and
code to send a message via the selected communication medium using the card information.

34. Instructions according to claim 33, wherein the selected communication medium comprises one of the following: telephone, facsimile, beeper, cellular telephone, electronic mail, and a pager.

35. A data carrier carrying processor-implementable instructions for carrying out a method according to any of claims 1 to 14.

36. A signal carrying processor-implementable instructions for carrying out a method according to any of claims 1 to 14.

37. A database system for compiling a database of information from a plurality of first users, wherein each first user provides information for a respective database entry and amendment or deletion of each database entry is restricted to its respective first user,
and wherein a plurality of second users are granted read-only access to the database entries.

38. A database system according to claim 37, wherein each database entry is assigned a classification parameter by its respective first user, and wherein search means is provided for second users to search the database on the basis of the classification parameters of the database entries.

39. An apparatus for receiving, storing and outputting data, comprising:
memory means for storing data;
input means operable by a first user to store, amend or delete a respective data entry in the memory means, and to attach a data descriptor to the stored data entry;
search means operable by a second user to detect a data entry on the basis of the data contained therein or on the basis of the data descriptor; and
output means for outputting the data entry to the second user.
